# EUROPÄISCHE PATENTSCHRIFT

(11) **EP 2 888 127 B1**
(45) Veröffentlichungstag und Bekanntmachung des Hinweises auf die Patenterteilung: **21.02.2018**
(21) Anmeldenummer: 13779767.6
(22) Anmeldetag: 09.10.2013
(51) Int. Cl.: B60L 5/22

(54) **STROMABNEHMER FÜR EIN SCHIENENFAHRZEUG**
CURRENT COLLECTOR FOR A RAIL-MOUNTED VEHICLE
PANTOGRAPHE POUR VÉHICULE FERROVIAIRE

(30) Priorität: 16.10.2012 DE 102012218828
(43) Veröffentlichungstag der Anmeldung: 01.07.2015
(73) Patentinhaber: Siemens Aktiengesellschaft, 80333 München (DE)
(72) Erfinder: GLINKA, Martin, 91080 Uttenreuth (DE)
(86) Internationale Anmeldenummer: PCT/EP2013/071000
(87) Internationale Veröffentlichungsnummer: WO 2014/060249

(56) Entgegenhaltungen:
- EP-A2- 0 869 029
- DE-A1-102008 032 588
- GB-A- 1 484 955

## Beschreibung

Die Erfindung betrifft einen Stromabnehmer, der auf einer Dachfläche eines Schienenfahrzeugs angeordnet ist und einen Abnehmerarm und ein Isolationssystem mit isolierenden Stützen aufweist, mit denen der Abnehmerarm elektrisch isolierend an einem Fahrzeugdachelement über der elektrisch geerdeten Dachfläche befestigt ist.

Schienenfahrzeuge, die ihre Energie von einer elektrischen Oberleitung beziehen, weisen einen Stromabnehmer mit einem Abnehmerarm auf, der am Fahrzeugdach befestigt ist. Zur elektrischen Isolierung des Abnehmerarms und dem üblicherweise elektrisch geerdeten Fahrzeugdach, ist der Stromabnehmer mit einem Isolationssystem ausgestattet, das den Abnehmerarm ausreichend gegen das Fahrzeugdach isoliert.

Zusätzlich zur Isolation kommt dem Isolationssystem auch die Aufgabe zu, den Abnehmerarm mechanisch am Fahrzeugdach zu befestigen, da auch diese Befestigung elektrisch isolierend ausgeführt sein muss. Hierzu umfasst das Isolationssystem Stützisolatoren, die sowohl der Isolierung als auch der mechanischen Befestigung des Abnehmerarms am Fahrzeugsdach dienen. Solche Stützisolatoren sind in der Regel Tellerisolatoren, die nach oben vom elektrisch geerdeten Fahrzeugdach aufragen und einen Abnehmerarmträger in Form einer Stützkonstruktion tragen, an der der Abnehmerarm befestigt ist.

Solch übliche Anordnungen von Stromabnehmern mit einem Abnehmerarm und einem Isolationssystem mit isolierenden Stützen auf einem Schienenfahrzeug werden in den Patentanmeldeschriften GB 148 955 A, EP 0 869 029 A2 sowie DE 10 2008 032588 A1 offenbart. Hierbei entspricht die EP 0 869 029 A2 dem Oberbegriff des Anspruchs 1. Bei Hochgeschwindigkeitszügen kann der Abnehmerarmträger eine Plattform sein, die das Fahrzeugdach nach oben abschließt. Die Stützisolatoren sind unterhalb der Plattform und somit innerhalb des Wagendachs angeordnet, sodass möglichst wenig Luftwiderstand beim Fahren des Fahrzeugs erzeugt wird. Durch die nach oben abschließende Plattform wird eine aerodynamische Form erzielt.

Gerade bei Hochgeschwindigkeitszügen ist es vorteilhaft, die Züge insgesamt flach zu gestalten, um einen Luftwiderstand zu verringern. Da dies sich nicht nachteilig auf die Stehhöhe innerhalb des Fahrzeugs auswirken soll, ist es vorteilhaft, den Dachaufbau in seiner Dicke möglichst gering zu halten. Die Dicke des Dachaufbaus wird unter anderem durch die Höhe des Isolationssystems vorgegeben.

Es ist eine Aufgabe der vorliegenden Erfindung einen Stromabnehmer auf einer Dachfläche eines Schienenfahrzeugs anzugeben, der einen flachen Dachaufbau ermöglicht.

Diese Aufgabe wird durch einen Stromabnehmer der eingangs genannten Art gelöst, bei dem das Isolationssystem erfindungsgemäß eine elektrisch isolierende Schicht umfasst, die zwischen der Dachfläche und dem Abnehmerarm angeordnet und von der Dachfläche mit Luft beabstandet ist.

Die Erfindung geht von der Überlegung aus, dass die bisher üblichen Stützisolatoren eine ausreichend große Isolationslänge aufweisen müssen, um einen elektrischen Überschlag durch die Luft an den Stützisolatoren vorbei auch bei hoher Luftfeuchtigkeit oder Regen zuverlässig zu vermeiden. Da das elektrisch geerdete Fahrzeugdach in der Regel unterhalb des Isolationssystems angeordnet ist, bildet diese Luftdurchschlagsstrecke von der geerdeten Dachfläche nach oben die minimale Isolationsstrecke, die für die Dicke des Dachaufbaus maßgeblich ist.

Die Erfindung geht von der weiteren Überlegung aus, dass ein geeigneter Feststoffisolator elektrisch erheblich besser isoliert als eine Luftschicht. Wenn die Luftschicht daher zumindest teilweise durch einen Feststoffisolator ersetzt werden kann, so ist die Durchschlagsstrecke geringer, sodass auch der Hochspannungseingang der Stützisolatoren näher am elektrisch geerdeten Fahrzeugdachelement angeordnet sein kann. Durch eine solche Annäherung kann die Dicke des Dachaufbaus verringert werden.

Die isolierenden Stützen sind zweckmäßigerweise solche Elemente, die sowohl als Isolatoren dienen als auch den Stromabnehmer tragen. Der Stromabnehmer ist zur Montage am elektrisch geerdeten Fahrzeugdachelement mit seiner Dachfläche vorgesehen. Das Fahrzeugdachelement und mit ihm die Dachfläche können, müssen jedoch kein Bestandteil des Stromabnehmers sein. Es ist jedoch möglich, dass die Dachfläche Teil des Fahrzeugdachelements ist, das Teil des Stromabnehmers ist. Die Dachfläche kann eine Außendachfläche oder eine Innendachfläche sein, die innerhalb des Fahrzeugdachs angeordnet ist. Sie bildet zweckmäßigerweise eine geschlossene und zum Fahrzeuginneren wasserdichte und insbesondere eine bezüglich üblicher Bahn-Hochspannungen durchschlagfeste Oberfläche. Es ist rein theoretisch auch möglich, dass die Dachfläche eine imaginäre Ebene ist, die von mehreren Befestigungselementen der Stützisolatoren aufgespannt wird.

Die isolierende Schicht umfasst zweckmäßigerweise eine Schicht aus einem elektrisch isolierenden Material, vorteilhafterweise einem Feststoffisolator. Eine oder mehrere weitere Schichten, beispielsweise eine UV-beständige Schicht und/oder eine wasserabweisende Schicht, können zusätzlich vorhanden sein, wobei die isolierende Schicht zweckmäßigerweise vollständig aus elektrisch isolierendem Material besteht.

Die elektrisch isolierende Schicht ist vorteilhafterweise eine geschlossene Schicht, die in ihrer Fläche - abgesehen von eventuell vorhandenen und gezielt ausgebildeten Wasserabführungen - keine Öffnungen nach unten innerhalb ihrer geschlossenen Fläche aufweist. Der Abnehmerarm kann zum Schleifen an einer Oberleitung vorbereitet sein und ist zweckmäßigerweise als Pantograph ausgeführt.

Die isolierende Schicht kann als Zwischenschicht zwischen einem Abnehmerarmträger und dem Fahrzeugdach gebildet sein oder den Abnehmerarmträger selbst bilden, so dass sie neben ihrer isolierenden Funktion auch den Abnehmerarm tragende Funktion erhält.

Wenn die isolierende Schicht als Zwischenschicht ausgeführt ist, so sind die isolierenden Stützen zweckmäßigerweise Stützisolatoren, die insbesondere waagerecht ausrichtet sein können. Die isolierende Schicht als Zwischenschicht ist dann zwischen der Dachfläche und zweckmäßigerweise zumindest jeweils einem Teil der Stützisolatoren angeordnet, sodass jeder der Stützisolatoren zumindest teilweise in Bezug zur Zwischenschicht gegenüber der Dachfläche angeordnet ist, insbesondere oberhalb der isolierenden Schicht. Vorteilhafterweise sind die Stützisolatoren vollständig oberhalb der isolierenden Schicht angeordnet, insbesondere so, dass ein senkrechter Schatten der Stützisolatoren vollständig auf die isolierende Schicht fällt. Weiter ist die isolierende Schicht vorteilhafterweise im Bereich der Stützisolatoren geschlossen, die Stützisolatoren und/oder auch eine elektrische Durchführung reichen also nicht durch die isolierende Schicht hindurch.

Bei einer Anordnung der isolierenden Schicht zwischen Stützisolator und geerdeter Dachfläche kann außerdem eine direkte elektrisch leitende Wasserstrecke zwischen den beiden Spannungspotentialen unterbrochen werden.

Eine vorteilhafte Ausführungsform der Erfindung sieht vor, dass der Stromabnehmer einen Abnehmerarmträger aufweist, der von den isolierende Stützen getragen ist, wobei die elektrisch isolierende Schicht eine Zwischenschicht zwischen dem Abnehmerarmträger und der Dachfläche ist, die zum Abnehmerarmträger elektrisch isolierend gelagert, insbesondere durch Luft beabstandet, ist. Durch die doppelte Luftschicht kann eine besonders gute Isolationswirkung und damit ein flacher Dachaufbau erreicht werden.

Weiter ist es vorteilhaft, wenn die isolierende Schicht als Platte, insbesondere als selbsttragende Platte, aus zumindest einem elektrisch isolierenden Material gebildet ist. Mit Hilfe dieser Luftschicht kann aufgrund der geringen materialspezifischen Dielektrizitätszahl von Luft (εᵣ=1) das elektrische Feld über eine geringe Distanz effektiv abgebaut werden. Es kann eine besonders einfache und selbsttragende isolierende Konstruktion erreicht werden, die von oberhalb und unterhalb angeordneten Elementen beabstandet ist. Zweckmäßigerweise ist die isolierende Schicht parallel zur Dachfläche ausgerichtet.

Wenn die isolierenden Stützen Stützisolatoren sind, so ist es bei feuchter Luft und insbesondere auch bei Regen vorteilhaft, um eine hohe Isolationswirkung zum Fahrzeugdach aufrechtzuerhalten, wenn zwischen den Stützisolatoren und der isolierenden Schicht und zwischen der isolierenden Schicht und der elektrisch geerdeten Dachfläche jeweils eine Luftschicht ist. Von der isolierenden Schicht abgeleitetes Wasser kann über eine ausreichend große Strecke geführt werden, sodass ein elektrischer Durchschlag über die Wasserstrecke zuverlässig vermieden wird.

Eine weitere vorteilhafte Ausführungsform der Erfindung sieht vor, dass die Stützisolatoren jeweils waagerecht oder zumindest gegen die Senkrechte geneigt angeordnet sind. Anders ausgedrückt weist eine Gerade zwischen dem Hochspannungsende und dem Erdende eines Stützisolators eine horizontale Komponente auf. Auf diese Weise kann auch bei einer großen Isolationslänge ein kompakter Dachaufbau erreicht werden. Zweckmäßigerweise ist die Gerade um mehr als 45° zur Senkrechten geneigt, insbesondere mehr als 70°. Die Senkrechte ist zweckmäßigerweise senkrecht zur geerdeten Dachfläche, und/oder in Gravitationsrichtung bei einem eben stehenden Fahrzeug angeordnet. Ein sehr kompakter Dachaufbau kann erreicht werden, wenn die Gerade horizontal angeordnet ist. Sind die Stützisolatoren Tellerisolatoren, verläuft die Gerade zweckmäßigerweise senkrecht zu den Tellern.

Insbesondere bei waagerecht ausgerichteten Stützisolatoren ist es vorteilhaft, wenn die isolierende Schicht parallel zu den Stützisolatoren angeordnet ist. Auf diese Weise kann eine besonders flache Dachkonstruktion hergestellt werden.

Bei Vorhandensein eines Abnehmerarmträgers zum Abstützen des Abnehmerarms ist es vorteilhaft, wenn auch die Strecke zwischen dem Abnehmerarmträger und dem elektrisch geerdeten Wagendach, beziehungsweise dessen Dachoberfläche, von der isolierenden Zwischenschicht unterbrochen ist. Allgemein gesprochen ist es vorteilhaft, wenn der Abnehmerarm auf einem Abnehmerarmträger gelagert ist, der von Stützisolatoren relativ zum Fahrzeugdach abgestützt ist, wobei die isolierende Schicht zwischen der Stützkonstruktion und der Dachfläche angeordnet ist. Die Stützkonstruktion ist vorteilhafterweise zwischen Stützisolatoren angeordnet. Sie kann eine äußere Dachoberfläche bilden, die zur aerodynamischen Gestaltung des Dachs, insbesondere bei Hochgeschwindigkeitszügen, beiträgt.

Üblicherweise sind weder die Stützisolatoren noch die Stützkonstruktion in der Weise wasserdicht ausgeführt, dass die isolierende Schicht auch bei auf das Fahrzeug fallendem Regen trocken bleibt. Um Überschläge über Wasserbrücken zu vermeiden, ist es daher vorteilhaft, wenn die isolierende Schicht eine schräge Oberfläche aufweist, auf der Wasser nach unten abfließt. Die Schräge bezieht sich auf ein waagerecht stehendes Fahrzeug. Das Wasser kann gezielt an eine günstige Stelle abgeleitet werden, sodass unerwünschte elektrische Wasserbrücken vermieden werden. Es kann die ganze Zwischenschicht, die insbesondere als Platte ausgeführt ist, eine schräge Ebene sein, oder nur ein Teil davon. Auch mehrere schräge Ebenen oder konvex und/oder konkave Flächen sind möglich.

Besonders vorteilhaft bildet die isolierende Schicht eine nach oben konvexe Platte. Durch die bauchige Ausführung nach oben kann der Regen nach unten und an den Rand der isolierenden Schicht abfließen. Alternativ oder zusätzlich ist es möglich, dass die isolierende Schicht zumindest einen nach oben konkav geformten Bereich aufweist, an dessen tiefster Stelle eine Wasserablaufstelle ist. Das Wasser wird auf diese Ablaufstelle zugeleitet, die insbesondere zur isolierenden Wasserabführung ausgebildet ist.

Eine besonders isolierende Wasserableitung kann erreicht werden, wenn die isolierende Schicht zumindest eine diskrete Wasserablaufstelle aufweist. Die Wasserablaufstelle ist zweckmäßigerweise an einem besonders günstigen Ort angeordnet und/oder so ausgeführt, dass eine elektrische Wasserbrücke vermieden wird.

Die Wasserablaufstelle kann durch eine konkav gewölbte Formgebung der isolierenden Schicht gebildet sein. Hierdurch kann ein Wasserkanal oder es können mehrere Wasserkanäle gebildet werden, die das Wasser gezielt auf die Wasserablaufstellt führen. Die Wölbung kann kontinuierlich und/oder geknickt sein.

Weiter ist es vorteilhaft, wenn die isolierende Schicht zumindest eine Wasserablaufstelle aufweist, an die eine Wasserabführung angeschlossen ist. Die Wasserabführung ist zweckmäßigerweise so ausgebildet, dass sie das Wasser elektrisch günstig von der isolierenden Schicht ableitet, zum Beispiel das Wasser in eine Abflussrichtung lenkt, zum Beispiel gezielt in eine Richtung oder flächig von der isolierenden Schicht weg. Die Wasserabführung kann Rippen aufweisen, die außen an der isolierenden Schicht angeordnet sind.

Vorteilhafterweise ist die Wasserabführung aus elektrisch isolierendem Material gebildet, sodass eine elektrische Brücke vermieden wird.

Außerdem wird vorgeschlagen, dass die Wasserabführung länger als die gerade Strecke zwischen der isolierenden Schicht und der Dachfläche im Bereich der Wasserablaufstelle ist. Auch hierdurch kann einer elektrischen Brücke entgegengewirkt werden. Die Länge der Wasserabführung wird zum Beispiel durch die Fließstrecke des Wassers an/in der Wasserabführung gebildet.

Weiter wird vorgeschlagen, dass die isolierende Schicht einen Luftraum zwischen sich und der darunter liegenden Dachfläche einschließt und eine Heizung vorhanden ist zur Erwärmung des Luftraums. Schnee auf der isolierenden Schicht kann abgeschmolzen und eine isolierende Wirkung verbessert werden. Der Luftraum ist zweckmäßigerweise nach außen abgeschlossen, gegebenenfalls bis auf eine oder mehrere Lüftungsöffnung zum Zu- und Abführen von Warmluft oder für eine Entfeuchtung des Luftraums. Alle Lüftungsöffnungen sollten hierbei insgesamt einen Querschnitt unterhalb 1/20, insbesondere unterhalb 1/50, der Fläche der isolierenden Schicht haben.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Es zeigen:
- FIG 1: einen Stromabnehmer auf dem Fahrzeugdach eines Triebwagens eines Schienenfahrzeugs in einer perspektivischen Ansicht schräg von oben,
- FIG 2: das Isolationssystem des Stromabnehmers mit einer isolierenden Schicht unter Stützisolatoren,
- FIG 3: eine alternative und nach oben konvex gewölbte Zwischenschicht mit seitlichen Rippen,
- FIG 4: einen Ausschnitt aus einer weiteren nach oben konkav geformten Zwischenschicht mit einer inneren Wasserablaufstelle und einer daran angeschlossenen Wasserabführung,
- FIG 5: eine konkav und konvex gewölbte Zwischenschicht in einer Ansicht von oben und
- FIG 6: eine schematische Schnittdarstellung durch die isolierende Schicht aus FIG 5 mit zwei Wasserabführungen.

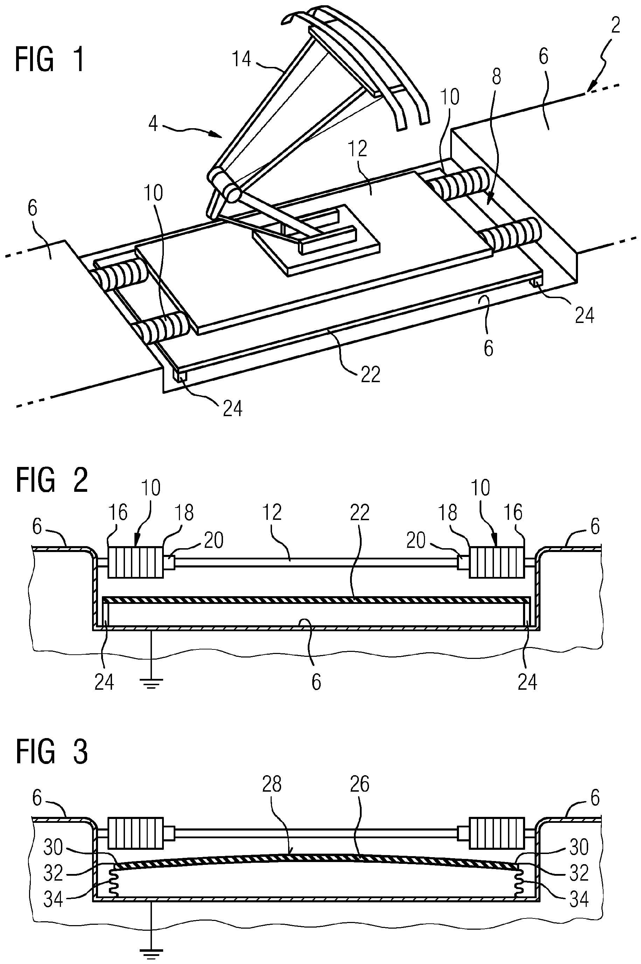

FIG 1 zeigt eine perspektivische Ansicht schräg von oben auf ein Fahrzeugdachelement 2 eines Fahrzeugdachs eines Triebwagens eines Schienenfahrzeugs, in das ein Stromabnehmer 4 eingebaut ist. Das Fahrzeugdachelement 2 hat eine elektrisch geerdete Dachfläche 6, die im Bereich des Stromabnehmers 4 eine Vertiefung 8 aufweist. In dieser Vertiefung 8 befindet sich der Stromabnehmer 4, der über vier Stützisolatoren 10 am Fahrzeugdachelement 2 befestigt ist. Die Stützisolatoren 10 tragen einen Abnehmerarmträger 12, der zweckmäßigerweise elektrisch leitend ist. In diesem Ausführungsbeispiel ist der Abnehmerarmträger 12 in Form einer Plattform aufgebaut, auf dem der Abnehmerarm 14 des Stromabnehmers 4 montiert ist. Der Abnehmerarmträger 12 ist von den Stützisolatoren 10 relativ zum Fahrzeugdachelement 2 abgestützt. Er bildet eine äußere Dachoberfläche, die zur aerodynamischen Gestaltung des Fahrzeugdachs 2 beiträgt. Während der Fahrt steht der Abnehmerarm 14 mit einer nicht dargestellten Oberleitung in elektrischem Kontakt zum Stromabgriff und zur Energieaufnahme zum Antrieb des Schienenfahrzeugs.

Der Abnehmerarm 14 ist oben mit zwei Bügeln zum Schleifen an einer Oberleitung eines Bahnnetzes und zum Abgriff der Bahnnetzspannung versehen. Über einen Stromanschluss ist der Abnehmerarm 14 mit den Traktionskomponenten sowie Hilfsbetriebstromversorgungen des Schienenfahrzeugs verbunden. Dieser Stromanschluss kann als Kabelverbindung mit Stecker oder Kabelendverschluss am Stromabnehmer ausgeführt sein.

Die Stützisolatoren 10 sind Tellerisolatoren, die nicht wie üblich senkrecht zwischen dem Abnehmerarmträger 12 und der Dachfläche 6 in der Vertiefung 8 angeordnet sind, sondern den Abnehmerarmträger 12 zwischen sich tragen. Hierzu können die Stützisolatoren 10 waagerecht beziehungsweise horizontal oder schräg angeordnet sein, sodass eine Gerade zwischen dem Hochspannungsende und dem Erdende waagerecht beziehungsweise horizontal oder schräg zur Vertikalen verläuft. Der Abnehmerarmträger 12 muss nicht plattenförmig sein wie in diesem Ausführungsbeispiel, sondern kann auch aus Streben konstruiert sein oder eine andere geeignete Form aufweisen.

Die horizontale Anordnung ist in FIG 1 und FIG 2 zu sehen, wobei FIG 2 den Stromabnehmer 4 in einer schematischen seitlichen Darstellung zeigt. Der Abnehmerarm 14 ist in FIG 2 der Übersichtlichkeit halber nicht dargestellt. Die Stützisolatoren 10 sind mit ihrem Erdende 16, also dem geerdeten Ende oder dem Ende des Niederpotentials an der Dachfläche 6 angeordnet und mit diesem Ende am Fahrzeugdachelement 2 befestigt. Am Hochspannungsende 18 ist der Stromabnehmer 4 befestigt, der z.B. auf dem Abnehmerarmträger 12 steht, die am Hochspannungsende 18 befestigt ist, in diesem Ausführungsbeispiel über ein Befestigungselement 20.

Zwischen der Dachfläche 6 in der Vertiefung 8 und den Stützisolatoren 10 ist eine elektrisch isolierende Zwischenschicht 22 aus einem Feststoffisolator angeordnet. Die isolierende Schicht 22 ist als Platte ausgeführt, die vorne und hinten über als senkrechte Seitenwände ausgeführte Stützen 24 an der Dachfläche 6 beziehungsweise dem Fahrzeugdachelement 2 befestigt ist. Durch diese Anordnung ist das Hochspannungsende 18 eines jeden Stützisolators 10 durch die isolierende Schicht 22 von der Dachfläche 6 getrennt. In anderen Worten: zwischen dem Hochspannungsenden 18 der Stützisolatoren 10 und Dachfläche 6 ist die isolierende Schicht 22 angeordnet. Die Anordnung ist derart, dass die kürzeste Linie zwischen dem Hochspannungsende 18 und der Dachfläche 6 durch die isolierende Schicht 22 führt.

Nicht nur das Hochspannungsende 18 sondern der überwiegende Teil eines jeden Stützisolators 10 ist durch die isolierende Schicht 22 von der Dachfläche 6 getrennt, sodass ein direkter elektrischer Überschlag vom Hochspannungsende 18 und dem überwiegenden Teil des Stützisolators 10 auf die Dachfläche 6 unterbunden wird. Der Abnehmerarmträger 12, der während des Betriebs des Schienenfahrzeugs auf dem Spannungsniveau der Oberleitung beziehungsweise des Abnehmerarms 14 gehalten ist, ist über ihre gesamte Fläche durch die isolierende Schicht 22 von der Dachfläche 6 getrennt, die isolierende Schicht 22 ist also vollständig unter dem gesamten Abnehmerarmträger 12 angeordnet.

Die isolierende Schicht 22 ist parallel zu den Stützisolatoren 10 angeordnet, wobei die Anordnungsrichtung der Stützisolatoren 10 durch eine gedachte Gerade zwischen dem Hochspannungsende 18 und dem Erdende 16 gebildet ist. Zwischen den Stützisolatoren 10 und der isolierenden Schicht 22 und auch zwischen der isolierenden Schicht 22 und der elektrisch geerdeten Dachfläche ist jeweils eine Luftschicht vorhanden.

Während der Fahrt des Schienenfahrzeugs ist sowohl der Abnehmerarmträger 12 als auch die isolierende Schicht 22 dem Regen ausgesetzt, sodass sich auf der isolierenden Schicht 22 Wasser sammeln kann. Dieses Wasser bildet eine elektrisch leitende Schicht, die bei einem ungeeigneten Abfluss zur Dachfläche 6 eine unerwünschte Kontaktierung mit dem Erdpotential der Dachfläche erzeugt und somit dieses Erdpotential in unerwünschte Nähe zu den Stützisolatoren 10 bringt, insbesondere zu deren Hochspannungsende 18.

Eine Möglichkeit, das Wasser gezielt abzuführen und unerwünschte Wasserbrücken zu unterbinden, ist in FIG 3 dargestellt.

FIG 3 zeigt eine alternative Zwischenschicht 26 auf der Dachfläche 6 des Fahrzeugdachs 2. Die nachfolgenden Beschreibungen der in der folgenden Figuren gezeigten Ausführungsbeispiele, beschränkt sich im Wesentlichen auf die Unterschiede zum Ausführungsbeispiele in den Figuren 1 und 2, auf das bezüglich gleichbleibender Merkmale und Funktionen verwiesen wird. Im Wesentlichen gleich bleibende Bauteile sind grundsätzlich mit den gleichen Bezugszeichen beziffert und nicht erwähnte Merkmale sind in den folgenden Ausführungsbeispielen übernommen, ohne dass sie erneut beschrieben sind.

Die isolierende Schicht 26 aus FIG 3 ist - wie die isolierende Schicht 22 - eine Platte aus einem Feststoffisolator, die jedoch nicht eben ausgeführt ist, sondern mit einer nach oben konvex gewölbten Oberfläche 28, z.B. mit einer oberen, geraden Scheitellinie oder Firstlinie und zwei unteren Trauflinien 30. Die Oberfläche 28 der isolierenden Schicht 6 ist hierdurch beidseitig schräg, so dass das Wasser von der Firstlinie zu den beiden Trauflinien 30 beidseitig nach unten abfließt. Anstellte der geraden Firstlinie ist auch eine zweidimensionale Krümmung, wie eine Oberfläche eines Kugelabschnitts oder eines anderen Rotationskörpers mit einer vertikalen Rotationsachse, möglich.

Bei dem in FIG 3 gezeigten Ausführungsbeispiel wird das Wasser an die beiden Trauflinien 30 geführt, die eine Wasserablaufstelle 32 bilden, an der das Wasser die isolierende Schicht 26 verlässt. Die beiden Wasserablaufstellen 32 sind linienförmig ausgeführt.

Die beiden Wasserablaufstellen 32 sind relativ dicht an der Dachfläche 6 angeordnet. Falls es beispielsweise durch Schneefall oder durch Eisbildung zwischen der isolierenden Schicht 26 und dem den Abnehmerarm 26 tragenden Abnehmerarmträger 12 zu einer elektrisch niederohmigen Strecke zwischen dem Abnehmerarmträger 12 und der isolierenden Schicht 26 kommen sollte, ist darauf zu achten, dass kein Kurzschluss durch fließendes Wasser von der isolierenden Schicht 26 auf die darunter liegende Dachfläche des Fahrzeugsdachs entsteht.

Da die Strecke von den Wasserablaufstellen 32 zur Dachfläche 6 zu kurz ist, um eine elektrisch niederohmige Wasser-, Schnee- oder Eisbrücke mit Sicherheit zu vermeiden, ist an den Wasserablaufstellen 32 jeweils eine Wasserabführung 34 angeordnet. In diesem Ausführungsbeispiel sind die Wasserabführungen 34 in Form von Längsrippen gestaltet, die zugleich die Stützen für die isolierende Schicht bilden und in diesem Ausführungsbeispiel wellenförmig ausgeführt sind. Durch die Wellen- oder Rippenform ist die Strecke, die das Wasser an der rippenförmigen Wasserabführung 34 von oben nach unten entlang der Rippen fließt, länger, als die gedachte kürzeste gerade Strecke zwischen der Wasserablaufstelle 32 und der Dachfläche 6. Hierdurch wird der Weg des Wassers an der Wasserabführung 34 soweit verlängert, dass die Bildung von elektrischen Brücken sicher vermieden wird. Die Wasserabführung 34 ist wie die isolierende Schicht 26 aus einem Feststoffisolator gebildet. Sie ist als umlaufende Seitenwand zwischen der Dachfläche 6 und der isolierenden Schicht 26 ausgeführt, so dass von der isolierenden Schicht ablaufendes Wasser an jeder der vier Seiten an der Rippenform abfließen muss.

Durch den umlaufenden Abschluss der isolierenden Schicht 26 mit der Wasserabführung 34 ist ein geschlossener Luftraum 29 zwischen der isolierenden Schicht 26 und der Dachfläche 6 gebildet. Dieser Luftraum kann durch Zuführung von Warmluft oder eine beheizte Dachfläche 6 erwärmt werden. Dadurch ist eine indirekte Heizung der isolierenden Schicht 26 möglich. Mit Hilfe einer beheizten Zwischenschicht 26 kann Eis und Schnee auf der isolierenden Schicht 26 geschmolzen werden und in Form von Wasser abfließen.

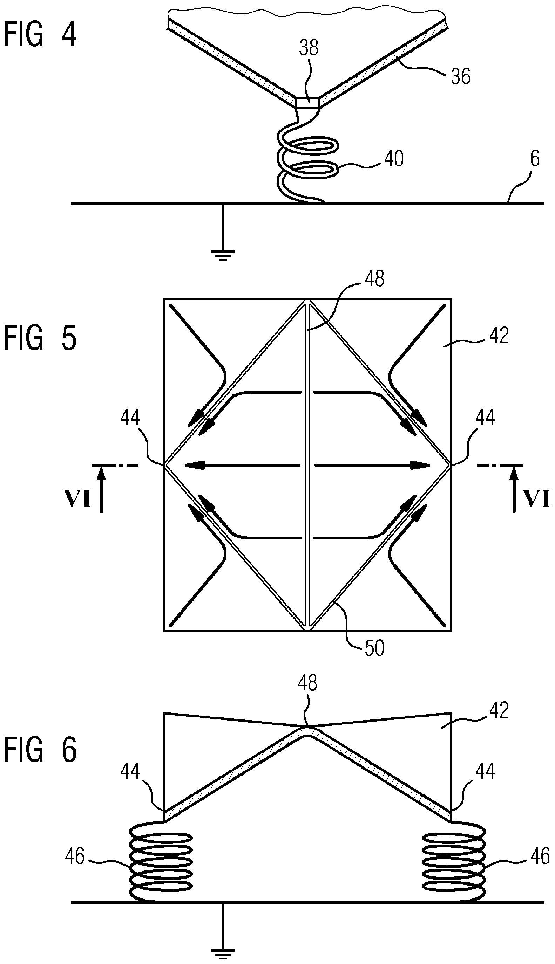

Durch die geringe Strecke zwischen der isolierenden Schicht 26 und dem darunter liegenden Dachaufbau, beziehungsweise der Dachfläche 6, kann es weiter vorteilhaft sein, den Wasserablauf von der isolierenden Schicht 26 auf wenige insbesondere diskrete Stellen zu beschränken. An diesen Wasserablaufstellen können weiterführende Maßnahmen zur Kurzschlussvermeidung getroffen werden. Entsprechend ist die isolierende Schicht 26 zweckmäßigerweise so geformt, dass der Wasserabfluss an einzelnen speziell dafür vorgesehenen Wasserablaufstellen erfolgt. Eine solche Wasserablaufstelle kann innerhalb der isolierenden Schicht 26 liegen, wie in FIG 4 angedeutet ist.

FIG 4 zeigt ein weiteres Ausführungsbeispiel einer isolierenden Schicht 36 zur Anordnung zwischen der Dachfläche 6 und des nicht dargestellten Abnehmerarmträgers 12. Die isolierende Schicht 36 ist geschnitten und nur ausschnittsweise dargestellt und ist nach oben hin konkav ausgeführt, z.B. in der Form eines Trichters, sodass das Wasser an die tiefste Stelle der konkaven Form läuft. An dieser Stelle ist eine Wasserablaufstelle 38 in Form einer Öffnung in der isolierenden Schicht 36 angeordnet. Zwar ist die Wasserablaufstelle 38 besonders dicht an der Dachfläche 6 angeordnet, jedoch ist eine Wasserabführung 40 an die Wasserablaufstelle 38 angeschlossen, die den Weg des Wassers von der Wasserablaufstelle 38 zur Dachfläche 6 durch ihre Wasserwegführung gegenüber der geraden und kürzesten Strecke zwischen Wasserablaufstelle und Dachfläche 6 verlängert. In FIG 4 ist die Wasserabführung 40 in Form einer Spiralwendel ausgeführt, wobei auch andere geeignete Formen zur Wasserwegverlängerung vorteilhaft sein können. Die Wasserabführung 40 ist aus einem Feststoffisolator in Form eines Kanals oder geschlossenen Rohres gebildet, sodass ein Überschlag von einer Wendel zur benachbarten Wendel verhindert wird. Die Länge der Wasserabführung wird durch die Fließstrecke des Wassers an oder in der Wasserabführung gebildet.

Eine weitere Ausführungsform einer isolierenden Schicht 42 mit Wasserablaufstellen 44 und daran angeschlossenen Wasserabführungen 46 ist in den Figuren 5 und 6 gezeigt. FIG 5 zeigt die isolierende Schicht 42 von oben, wohingegen FIG 6 einen schematischen Schnitt durch die isolierende Schicht 42 entlang der Linie VI-VI zeigt. Die isolierende Schicht 42 ist nach oben konvex gewölbt mit einer oberen Firstlinie 48. Durch die geknickte Wölbung entstehen Kanäle 50, die jeweils zu einer Wasserablaufstelle 44 führen. Wege des von der Firstlinie 48 oder den Rändern der isolierenden Schicht 42 zu den Wasserablaufstellen 44 fließenden Wassers sind in den Figuren 5 und 6 durch Pfeile dargestellt. Die Wasserabführungen 46 sind analog zu der Wasserabführung 40 aus FIG 4 ausgestaltet, wobei auch andere Wasserweg verlängernde Ausführungen vorteilhaft sein können.

Obwohl die Erfindung im Detail durch die bevorzugten Ausführungsbeispiele näher illustriert und beschrieben wurde, so ist die Erfindung nicht durch die offenbarten Beispiele eingeschränkt.

## Patentansprüche

1. Stromabnehmer (4), der auf einer Dachfläche eines Schienenfahrzeugs angeordnet ist und einen Abnehmerarm (14) und ein Isolationssystem mit isolierenden Stützen (10) aufweist, mit denen der Abnehmerarm (14) elektrisch isolierend an einem Fahrzeugdachelement (2) über der elektrisch geerdeten Dachfläche (6) befestigt ist,
**dadurch gekennzeichnet, dass** das Isolationssystem eine elektrisch isolierende Schicht (22, 26, 36, 42) umfasst, die zwischen der Dachfläche (6) und dem Abnehmerarm (14) angeordnet und von der Dachfläche (6) mit Luft beabstandet ist.

2. Stromabnehmer (4) nach Anspruch 1,
**gekennzeichnet durch** einen Abnehmerarmträger (12), der von den isolierende Stützen (10) getragen ist, wobei die elektrisch isolierende Schicht (22, 26, 36, 42) eine Zwischenschicht zwischen dem Abnehmerarmträger (12) und der Dachfläche (6) ist, die zum Abnehmerarmträger (12) elektrisch isolierend gelagert ist.

3. Stromabnehmer (4) nach Anspruch 1 oder 2,
**dadurch gekennzeichnet, dass** die isolierenden Stützen (10) Stützisolatoren sind und zwischen den Stützisolatoren (10) und der isolierenden Schicht (22, 26, 36, 42) und zwischen der isolierenden Schicht (22, 26, 36, 42) und der elektrisch geerdeten Dachfläche (6) jeweils eine Luftschicht ist.

4. Stromabnehmer (4) nach Anspruch 3,
**dadurch gekennzeichnet, dass** die Stützisolatoren (10) jeweils so angeordnet sind, dass eine Gerade zwischen dem Hochspannungsende (18) und dem Erdende (16) eines Stützisolators (10) eine horizontale Komponente aufweist.

5. Stromabnehmer (4) nach Anspruch 3 oder 4,
**dadurch gekennzeichnet, dass** die isolierende Schicht (22, 26) parallel zu den Stützisolatoren (10) angeordnet ist.

6. Stromabnehmer (4) nach einem der vorhergehenden Ansprüche,
**dadurch gekennzeichnet, dass** der Abnehmerarm (14) auf einem Abnehmerarmträger (12) gelagert ist, der von Stützisolatoren (10) relativ zum Fahrzeugdach (6) abgestützt ist, wobei die isolierende Schicht (22, 26, 36, 42) zwischen der Stützkonstruktion und der Dachfläche (6) angeordnet ist.

7. Stromabnehmer (4) nach einem der vorhergehenden Ansprüche,
**dadurch gekennzeichnet, dass** die isolierende Schicht (26, 36, 42) eine Schräge Oberfläche aufweist, auf der Wasser nach unten abfließt.

8. Stromabnehmer (4) nach einem der vorhergehenden Ansprüche,
**dadurch gekennzeichnet, dass** die isolierende Schicht (36, 42) zumindest einen nach oben konkav geformten Bereich aufweist, an dessen tiefster Stelle eine Wasserablaufstelle (32, 38) ist.

9. Stromabnehmer (4) nach einem der vorhergehenden Ansprüche,
**dadurch gekennzeichnet, dass** die isolierende Schicht (36, 42) zumindest eine diskrete Wasserablaufstelle (32, 38) aufweist.

10. Stromabnehmer (4) nach Anspruch 9,
**dadurch gekennzeichnet, dass** die Wasserablaufstelle (32, 38) durch eine konkav gewölbte Formgebung der isolierenden Schicht (36, 42) gebildet ist.

11. Stromabnehmer (4) nach einem der vorhergehenden Ansprüche,
**dadurch gekennzeichnet, dass** die isolierende Schicht (26, 36, 42) zumindest eine Wasserablaufstelle (32, 38, 44) aufweist, an die eine Wasserabführung (34, 40, 46) angeschlossen ist.

12. Stromabnehmer (4) nach Anspruch 11,
**dadurch gekennzeichnet, dass** die Wasserabführung (34, 40, 46) aus elektrisch isolierendem Material gebildet ist.

13. Stromabnehmer (4) nach Anspruch 11 oder 12,
**dadurch gekennzeichnet, dass** die Wasserabführung (34, 40, 46) länger als die gerade Strecke zwischen der isolierenden Schicht (26, 36, 42) und der Dachfläche (6) im Bereich der Wasserablaufstelle (32, 38, 44) ist.

14. Stromabnehmer (4) nach einem der vorhergehenden Ansprüche,
**dadurch gekennzeichnet, dass** die isolierende Schicht (26) einen Luftraum zwischen sich und der darunter liegenden Dachfläche (6) einschließt und eine Heizung vorhanden ist zur Erwärmung des Luftraums.

## Claims

1. Current collector (4) which is arranged on a roof surface of a rail vehicle and has a collector arm (14) and an insulation system having insulating posts (10) with which the collector arm (14) is fastened in electrically insulating fashion on a vehicle roof element (2) above the electrically grounded roof surface (6),
**characterized in that**
the insulation system comprises an electrically insulating layer (22, 26, 36, 42), which is arranged between the roof surface (6) and the collector arm (14) and is spaced apart from the roof surface (6) by an air gap.

2. Current collector (4) according to Claim 1,
**characterized by**
a collector arm carrier (12), which is borne by the insulating posts (10), wherein the electrically insulating layer (22, 26, 36, 42) is an interlayer between the collector arm carrier (12) and the roof surface (6), which is mounted so as to be electrically insulated from the collector arm carrier (12).

3. Current collector (4) according to Claim 1 or 2,
**characterized in that** the insulating posts (10) are post insulators and in each case one air-filled layer is provided between the post insulators (10) and the insulating layer (22, 26, 36, 42) and between the insulating layer (22, 26, 36, 42) and the electrically grounded roof surface (6).

4. Current collector (4) according to Claim 3,
**characterized in that** the post insulators (10) are each arranged in such a way that a straight line between the high-voltage end (18) and the grounding end (16) of a post insulator (10) has a horizontal component.

5. Current collector (4) according to Claim 3 or 4,
**characterized in that** the insulating layer (22, 26) is arranged parallel to the post insulators (10).

6. Current collector (4) according to one of the preceding claims, **characterized in that** the collector arm (14) is mounted on a collector arm carrier (12), which is supported relative to the vehicle roof (6) by post insulators (10), wherein the insulating layer (22, 26, 36, 42) is arranged between the post structure and the roof surface (6).

7. Current collector (4) according to one of the preceding claims, **characterized in that** the insulating layer (26, 36, 42) has a sloping surface, on which water flows away downwards.

8. Current collector (4) according to one of the preceding claims, **characterized in that** the insulating layer (36, 42) has at least one upwardly concavely shaped region, with a water runoff point (32, 38) being at the lowest point of said region.

9. Current collector (4) according to one of the preceding claims,
**characterized in that** the insulating layer (36, 42) has at least one discrete water runoff point (32, 38).

10. Current collector (4) according to Claim 9,
**characterized in that** the water runoff point (32, 38) is formed by a concavely curved shape of the insulating layer (36, 42).

11. Current collector (4) according to one of the preceding claims,
**characterized in that** the insulating layer (26, 36, 42) has at least one water runoff point (32, 38, 44), to which a water removal section (34, 40, 46) is connected.

12. Current collector (4) according to Claim 11,
**characterized in that** the water removal section (34, 40, 46) is formed from electrically insulating material.

13. Current collector (4) according to Claim 11 or 12,
**characterized in that** the water removal section (34, 40, 46) is longer than the straight section between the insulating layer (26, 36, 42) and the roof surface (6) in the region of the water runoff point (32, 38, 44).

14. Current collector (4) according to one of the preceding claims,
**characterized in that** the insulating layer (26) encloses an air space between itself and the roof surface (6) below said insulating layer, and a heater is provided for heating the air space.

## Revendications

1. Appareil (4) de prise de courant, qui est monté sur une surface de toit d'un véhicule ferroviaire et qui a un bras (14) et un système d'isolation à support (10) isolant, par lesquels le bras (14) de l'appareil de prise de courant est fixé en étant isolé électriquement sur un élément (2) de toit du véhicule, au dessus de la surface (6) du toit mise à la terre électriquement,
**caractérisé en ce que** le système d'isolation comprend une couche (22, 26, 36, 42) isolante du point de vue électrique, qui est disposée entre la surface (6) du toit et le bras (14) de l'appareil de prise de courant et est à distance de la surface (6) du toit par de l'air.

2. Appareil (4) de prise de courant suivant la revendication 1,
**caractérisé par** un support (12) du bras de l'appareil de prise de courant, qui est porté par les supports (10) isolants, la couche (22, 26, 36, 42) isolante du point de vue électrique étant une couche intermédiaire entre le support (12) du bras de l'appareil de prise de courant et la surface (6) du toit, couche qui est montée d'une manière isolante du point de vue électrique par rapport au support (12) du bras de l'appareil de prise de courant.

3. Appareil (4) de prise de courant suivant la revendication 1 ou 2,
**caractérisé en ce que** les supports (10) isolants sont des isolateurs supports et il y a respectivement une couche d'air entre les isolateurs (10) supports et la couche (22, 26, 36, 42) isolante et entre la couche (22, 26, 36, 42) isolante et la surface (6) du toit mise à la terre du point de vue électrique.

4. Appareil (4) de prise de courant suivant la revendication 3,
**caractérisé en ce que** les isolateurs (10) supports sont disposés de manière à ce qu'une droite entre l'extrémité (18) de haute tension et l'extrémité (16) à la terre d'un isolateur (10) support ait une composante horizontale.

5. Appareil (4) de prise de courant suivant la revendication 3 ou 4,
**caractérisé en ce que** la couche (22, 26) isolante est disposée parallèlement aux isolateurs (10) supports.

6. Appareil (4) de prise de courant suivant l'une des revendications précédentes,
**caractérisé en ce que** le bras (14) de l'appareil de prise de courant est monté sur un support (12) du bras de l'appareil de prise de courant, support qui est appuyé par des isolateurs (10) supports par rapport au toit (6) du véhicule, la couche (22, 26, 36, 42) isolante étant disposée entre la construction des supports et la surface (6) du toit.

7. Appareil (4) de prise de courant suivant l'une des revendications précédentes,
**caractérisé en ce que** la couche (26, 36, 42) isolante a une surface en pente sur laquelle l'eau ruisselle vers le bas.

8. Appareil (4) de prise de courant suivant l'une des revendications précédentes,
**caractérisé en ce que** la couche (36, 42) isolante a au moins une partie concave vers le haut, au point le plus bas de laquelle il y a un point (32, 38) d'évacuation de l'eau.

9. Appareil (4) de prise de courant suivant l'une des revendications précédentes,
**caractérisé en ce que** la couche (36, 42) isolante a au moins un point (32, 38) discret d'évacuation de l'eau.

10. Appareil (4) de prise de courant suivant la revendication 9,
**caractérisé en ce que** le point (32, 38) d'évacuation de l'eau est formé par un façonnage concave de la couche (36, 42) isolante.

11. Appareil (4) de prise de courant suivant l'une des revendications précédentes,
**caractérisé en ce que** la couche (26, 36, 42) isolante a au moins un point (32, 38, 44) d'évacuation de l'eau, auquel est raccordée une évacuation (34, 40, 46) d'eau.

12. Appareil (4) de prise de courant suivant la revendication 11,
**caractérisé en ce que** l'évacuation (34, 40, 46) d'eau est en un matériau isolant du point de vue électrique.

13. Appareil (4) de prise de courant suivant la revendication 11 ou 12,
**caractérisé en ce que** l'évacuation (34, 40, 46) d'eau est plus longue que l'étendue en ligne droite entre la couche (26, 36, 42) isolante et la surface (6) du toit dans la région du point (32, 38, 44) d'évacuation d'eau.

14. Appareil (4) de prise de courant suivant l'une des revendications précédentes,
**caractérisé en ce que** la couche (26) isolante inclut un espace d'air entre elle et la surface (6) du toit sousjacente et il y a un chauffage pour réchauffer l'espace d'air.
